# EUROPÄISCHE PATENTSCHRIFT

(11) **EP 3 643 843 B1**
(45) Veröffentlichungstag und Bekanntmachung des Hinweises auf die Patenterteilung: **06.09.2023**
(21) Anmeldenummer: 19205629.9
(22) Anmeldetag: 28.10.2019
(51) Int. Cl.: E03C 1/04, B05B 1/16, F16K 11/044, B05B 1/30, B05B 12/00, F16K 31/524, F16K 31/56, B05B 1/18

(54) **SCHALTPATRONE ZUR ZUSCHALTUNG EINES WASSERWEGS IN EINER ARMATUR, EINER HANDBRAUSE ODER EINEM BRAUSEKOPF**
CIRCUIT CARTRIDGE FOR SUPPLYING A WATER PATH IN AN ARMATURE, A HAND HELD SHOWER OR A SHOWER HEAD
CARTOUCHE DE COMMUTATION POUR CONNECTER UNE VOIE D'EAU DANS UNE ARMATURE, UNE DOUCHETTE OU UNE POMME DE DOUCHE

(30) Priorität: 26.10.2018 DE 102018126872
(43) Veröffentlichungstag der Anmeldung: 29.04.2020
(73) Patentinhaber: Kludi GmbH & Co. KG, 58706 Menden Sauerland (DE)
(72) Erfinder: Wiesendahl, Guido, 58099 Hagen (DE); Rohlfsen, Mark, 58099 Hagen (DE); Litzinger, Anton, 58640 Iserlohn (DE); Salomon, Thomas, 33330 Gütersloh (DE); Stückerjürgen, Karl-Heinz, 33415 Verl (DE); Alonso Garcia, Miguel, 58675 Hemer (DE)
(74) Vertreter: Tarvenkorn, Oliver

(56) Entgegenhaltungen:
- CA-A1- 2 428 615
- DE-U1-202017 100 013
- US-A1- 2008 067 264
- US-A1- 2009 289 129

## Beschreibung

Die Erfindung betrifft eine Schaltpatrone zur Zuschaltung eines Wasserwegs in einer Armatur, einer Handbrause oder einem Brausekopf.

Bei Sanitärarmaturen, Küchenarmaturen oder Brauseköpfen ist oftmals gewünscht, die Form und Art der Wasserabgabe und/oder den Volumenstrom im Gebrauch ändern zu können. Eine Besonderheit und zugleich Schwierigkeit dieser Anwendungsfelder besteht darin, dass elektrische Hilfsenergie zur Durchführung von Schaltvorgängen meist nicht zur Verfügung steht. Die Umschaltung muss daher vom Benutzer rein manuell vorgenommen werden und zwar gegen die Kräfte, die durch den im System anstehenden Wasserdruck hervorgerufen werden. Eine weitere Besonderheit und Schwierigkeit besteht in dem engen Bauraum. Sanitärarmaturen, Brauseköpfe und Handbrausen mit Schaltfunktion sollen z. B. aus optischen Gründen in ihren Außenabmaßen gegenüber solchen ohne Um- oder Zuschaltfunktion nicht wesentlich vergrößert werden. In einem vorhandenen Bauraum ist aber nur sehr wenig nutzbarer Platz vorhanden.

Beispielsweise sind verschiedene Handbrausen mit einer Umschalttaste bekannt, bei denen die Wasseraustrittsöffnungen im Brausekopf in wenigstens zwei getrennten Zonen angeordnet sind, um verschiedene Strahlbilder erzeugen zu können. Insbesondere besitzen die Zonen unterschiedliche Düsenöffnungen, um weiche, harte, pulsierende oder mit Luft vermischte Wasserstrahlen zu erzeugen.

Die WO 2017 059 793 A1 und die DE 10 2015 219 413 B3 beschreiben jeweils eine Handbrause, bei der eine Umschaltung durch Drehen eines Teils des Brausekopfes bewirkt wird. Dazu muss ein Knauf mit dem Daumen tangential verschoben werden. Dies erfordert einige Kraft, gerade wenn die Handbrause mit Wasserdruck beaufschlagt ist. Eine komfortable Umschaltung ist daher nur vor Gebrauch möglich, wenn die Handbrause ganz mit der Hand gegriffen werden kann, aber nicht während des Gebrauchs, wenn Wasserdruck anliegt und der Brausekopf möglicherweise auch noch über Kopf in einer Halterung positioniert ist.

Aus der DE 10 2012 212 300 A1 ist eine Handbrause bekannt, bei der über eine mehrfache Betätigung einer Umschalttaste eine sequentielle Folge von Strahlbildern abrufbar ist. Für die Umschaltung wird ein relativ großer Bauraum benötigt, weil die Schalt- und Ventilelemente so angeordnet sind, dass sie der Bewegung der Umschalttaste folgen, also quer zur Fließrichtung angeordnet sind.

Die Patentschrift DE10 2013 006 602 B4 zeigt eine Handbrause, bei der vier getrennte Schalttasten vorhanden sind. Zwar kann der Benutzer über eine der Schalttasten gezielt die gewünschte Zone ansteuern, jedoch ist die Schalteinheit sehr komplex aufgebaut.

WO2012041195A1 zeigt eine stabförmige Handbrause, die eine als "Kugelschreiberantrieb" bekannte Druck-Rast-Einheit besitzt. Über eine seitlich am Handgriff der Handbrause gelagerte Taste kann der Wasserweg geöffnet oder geschlossen werden. Eine Zu- oder Umschaltung von Teil-Wasserwegen ist nicht vorgesehen.

Alle Beispiele aus dem Stand der Technik für Handbrausen haben den Nachteil, dass das Gehäuse der Handbrausen speziell gestaltet werden muss, um die teilweise sehr komplexe Umschaltfunktion zu erreichen. Dementsprechend sind gesonderte Spritzgießwerkzeuge erforderlich. Es ist nicht möglich, gleichartige Werkzeuge für eine Handbrause mit oder ohne Umschaltfunktion zu verwenden.

Eine in US2008/0067264A1 offenbarte Schaltpatrone ist nicht platzsparend ausgebildet, u.a. ist dies auf die Betätigungsrichtung für das Ventilzurückzuführen, die nicht parallel zur Längserstreckung eines über die Umschalttaste betätigbaren Schaltelements ist, sondern quer dazu. Die Schaltpatrone sieht drei Stellungen vor, nämlich eine Sperrstellung und zwei Betriebsstellungen, zwischen denen eine Umschaltung der Wasserwege vorgenommen wird.

CA 2 428 615 A1 beschreibt ebenfalls eine Umschaltlösung mit einer zusätzlichen Sperrstellung. Es handelt sich bei dem hier beschriebenen Gegenstand um eine Spritze mit einer Umschaltventileinheit, die nicht in einen schmalen Auslauf einer Armatur oder den Griff einer Handbrause integrierbar ist.

Die Aufgabe der Erfindung besteht somit darin, eine Armatur, eine Handbrause oder einen Brausekopf mit einer einfachen und platzsparenden Einheit für eine Zuschaltung von Wasserwegen umzurüsten, welche modular in ein Gehäuse der Armatur oder der Brause einsetzbar ist.

Diese Aufgabe wird durch eine Schaltpatrone mit den Merkmalen des Anspruchs 1 gelöst.

Der Vorteil der Schaltpatrone nach der Erfindung besteht insbesondere darin, dass sie eine selbstständig funktionsfähige Einheit bildet, durch die nur wenige Modifikationen an der Armatur oder Handbrause erforderlich sind, um in einer bestehenden Baureihe eine zusätzliche Zuschaltfunktion eines Fließwegs zu ermöglichen.

Nach der Erfindung besitzt die Schaltpatrone nur eine Zuschaltfunktion für einen Nebenfließkanal. Über diesen ist eine weitere Zone am Armaturenauslauf bzw. am Brauseboden zuschaltbar, z. B. für einen Massagestrahl. Somit ist ein immer offener Hauptfließkanal vorhanden und daneben ein vom Benutzer über die Umschalttaste zu öffnender oder zu schließender Nebenfließkanal.

Bei der Beschreibung der Erfindung wird der Begriff "Umschalttaste" unabhängig davon benutzt, dass eigentlich eine Zuschaltfunktion gegeben ist.

Die kompakte Bauweise der Schaltpatrone ist möglich, weil erfindungsgemäß die Betätigungsrichtung für ein stabförmiges Schaltelement in Längsrichtung des Nebenfließkanals und vorzugsweise zugleich in Längsrichtung des Gehäuseabschnitts verläuft, in welchen die Schaltpatrone eingesetzt ist.

Wenn die Schaltpatrone in einen Armaturenauslauf einer Waschtischarmatur oder in den Griff einer Handbrause eingesetzt ist, bedeutet dass, dass die Betätigungsrichtung parallel zur Durchflussrichtung des Wassers und damit zur Längserstreckung des Auslaufs der Armatur bzw. des Handgriffs der Handbrause ist. Die Anordnung ist wichtig, weil in Längsrichtung, anders als bei den meist quer dazu angeordneten Ventilen nach dem Stand der Technik, stets genug Bauraum vorhanden ist, so dass u.a. die Anordnung und Abdichtung der beweglichen Teile einfacher realisierbar sind.

Bei einer bevorzugten Ausführungsform der erfindungsgemäßen Schalteinheit, die mit einer sogenannten Druck-Rast-Einheit nach dem bewährten Kugelschreiberprinzip zwischen zwei Endlagen hin und her schaltet, können außerdem aufgrund der Längsausrichtung längere Federwege vorgesehen sein.

Bevorzugt wird die Verzweigung in Haupt- und Nebenfließkanal innerhalb der Schaltpatrone vorgenommen, die dann nur eine Zulauföffnung besitzt, welche direkt mit einem Anschlusselement verbunden ist. Möglich ist aber auch, zwei Zulauföffnungen vorzusehen und die Aufteilung der Wasserwege somit außerhalb der Schaltpatrone vorzunehmen. Der Vorteil der schlanken Bauweise des Gehäuses aufgrund der Schaltrichtung in Längsrichtung des Gehäuses und der Fließwege ist in beiden Fällen gegeben.

Die länglich ausgebildete Schaltpatrone wird beim Anwendungsfall der Handbrause vorzugsweise in den Hohlraum im Bereich des Handgriffs hineingeschoben. Hier kann sie anstelle des üblicherweise dort vorhandenen Schlauchs oder Rohrs den Wasseranschluss und den Brausekopf miteinander verbinden.

Die Bewegung des Schaltelements, welches auf den Dichtkolben einwirkt, wird vom Benutzer über eine Umschalttaste ausgelöst. Nach einer bevorzugten Ausführungsform ist die Umschalttaste direkt am Gehäuse der Schaltpatrone schwenkbar gelagert. Das Gehäuse der Armatur bzw. der Handbrause benötigt somit keine Anpassungen in seinem Inneren zur Lagerung der Umschalttaste, sondern es muss lediglich eine Aussparung für die Umschalttaste vorgesehen sein. Diese Aussparung ist z. B. durch Einsätze im Spritzgießwerkzeug des Gehäuseteils leicht realisierbar.

Eine besonders bevorzugte Ausführungsform der Erfindung sieht vor, ein handelsübliches Rückflussverhindererventil in die Mündungsöffnung des Nebenfließkanals im Bereich einer Verzweigungsstelle des Fließwegs in der Schaltpatrone zu setzen und dessen Dichtkolben zum Öffnen und Verschließen des Nebenfließkanals zu nutzen. Es wird also ein mit dem Wasserstrom schließendes Sitzventil geschaffen, indem einfach die fertige Einheit des Rückflussverhindererventils in das Gehäuse der Schaltpatrone eingesetzt wird.

Der Nebenfließkanal wird am Rückflussverhindererventil über den anstehenden Wasserdruck in der Wasserzulauföffnung der Schaltpatrone automatisch in Fließrichtung abgesperrt. Zugleich besitzt das Rückflussverhindererventil einen beweglich gelagerten Dichtkolben, der mittels des Schaltelements aus seinem Dichtsitz heraus verschiebbar ist, um den Nebenfließkanal zu öffnen.

Damit wird eine besonders kostengünstige Lösung geschaffen, weil gerade die für eine gute Dichtwirkung wichtigen und zudem sehr filigranen Ventilbauteile nicht speziell z. B. für eine einzelne Baureihe von Handbrausen hergestellt werden müssen. Über die Verwendung des Rückflussverhindererventils kann eine einbaufertige Einheit bereitgestellt werden.

Vorzugsweise ist außerdem zusätzlich eine Rückstellfeder vorgesehen, durch welche erreicht wird, dass die Umschalttaste nicht einfach lose in ihrem Lager hängt. Sie wird vielmehr bis zur Betätigung durch den Benutzer in einer bestimmten Ausgangslage gehalten, so dass sie z. B. bündig mit den sonstigen Teilen des Gehäuses der Armatur oder Handbrause ist.

Die Erfindung wird nachfolgend am Beispiel einer Handbrause und mit Bezug auf die Zeichnungen näher erläutert. Die Figuren zeigen im Einzelnen:
- Fig. 1: eine Handbrause in perspektivischer Ansicht;
- Fig. 2: eine Handbrause im Schnitt;
- Fig. 3, 4: eine Schaltpatrone gemäß einer ersten Ausführungsform, jeweils in perspektivischer Ansicht;
- Fig. 5: Funktionsteile der Schaltpatrone in perspektivischer Ansicht;
- Fig. 6: Teile der Schaltpatrone in einer vereinfachten, perspektivischen Schnittansicht;
- Fig. 7: Teile der Handbrause mit einer Detailansicht der Schaltpatrone im Schnitt; und
- Fig. 8: Teile einer Schaltpatrone gemäß einer zweiten Ausführungsform in perspektivischer Ansicht.

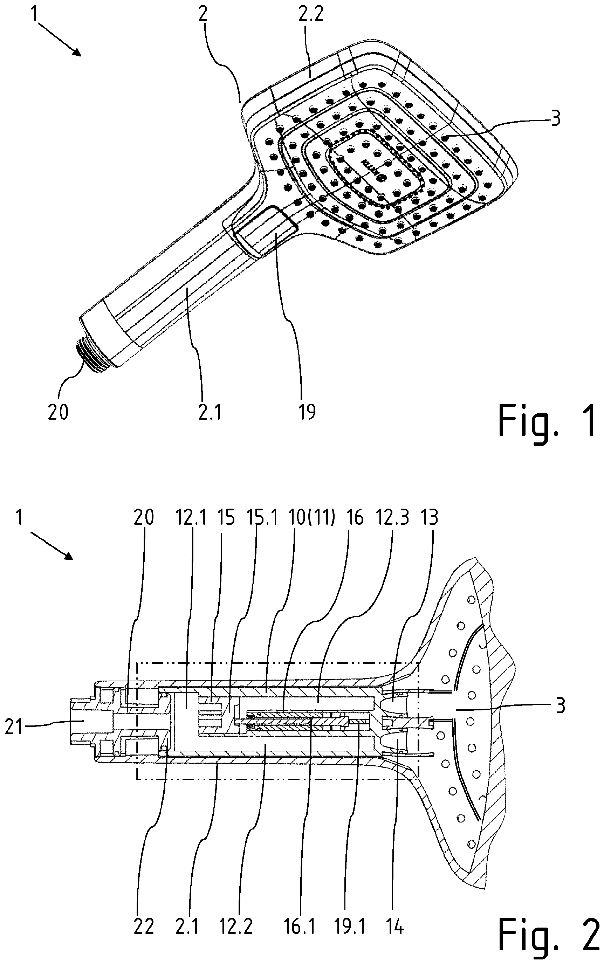

In Figur 1 ist eine Handbrause 1 dargestellt, die mit einer Schaltpatrone nach der Erfindung versehen ist. Davon ist außen nur eine Umschalttaste 19 sichtbar. Ansonsten umfasst die Handbrause 1 in üblicher Bauweise ein Gehäuse 2, das sich von einem schlanken Griffbereich 2.1 mit einem Wasseranschluss 20 ausgehend zu einem breiten Kopfbereich 2.2 erweitert, der mit einem Brauseboden 3 mit einer Vielzahl von Wasseraustrittsöffnungen versehen ist.

Figur 2 zeigt einen Schnitt durch einen zentralen Bereich der Handbrause 1. Der Griffbereich 2.1 ist hohl und zu seinem in Fig. 2 links gelegenen Ende hin offen. Dort ist eine Wasseranschlusseinheit 20 eingeschoben, die eine in Längsrichtung durchgängige Wasserzulauföffnung 21 aufweist. Die Schaltpatrone 10 erstreckt sich überwiegend in Längsrichtung des Griffbereichs 2.1 und ist dabei so schlank, dass sie im Inneren des Griffbereichs 2.1 aufgenommen werden kann, ohne dass dieser in seinem Querschnitt erweitert werden muss.

Die Wasseranschlusseinheit 20 besitzt an einem Ende ein Schraubgewinde, an dem ein Brauseschlauch angebracht werden kann, und an der anderen Seite einen Stutzen 22 mit Dichtring, der in eine Wasserzulauföffnung 12.1 der Schaltpatrone 10 eingeschoben ist. An der gegenüberliegenden Seite besitzt ein Gehäuse 11 der Schaltpatrone 10 zwei Wasserauslauföffnungen 13, 14, die mit verschiedenen Zonen, also getrennt ansteuerbaren Gruppen von Wasseraustrittsöffnungen, im Brauseboden 3 in Fließverbindung stehen.

Von der Umschalttaste ist in Fig. 2 nur ein Schaltnocken 19.1 erkennbar. Dieser ist mittig zwischen einem ständig offenen Hauptfließkanal 12.2 und einem absperrbaren Nebenfließkanal 12.3 angeordnet. Die Lage des Schaltnockens 19.1 bedingt zugleich die Position eines Schaltelements 16.1, das bei dem dargestellten Ausführungsbeispiel Teil einer Druck-Rast-Einheit 16 ist und gegen einen beweglich gelagerten Dichtkolben 15.1 drückt. Der Dichtkolben 15.1 ist Teil eines Rückflussverhindererventils 15, das in die Eingangsöffnung des Nebenfließkanals 12.3 eingesetzt ist.

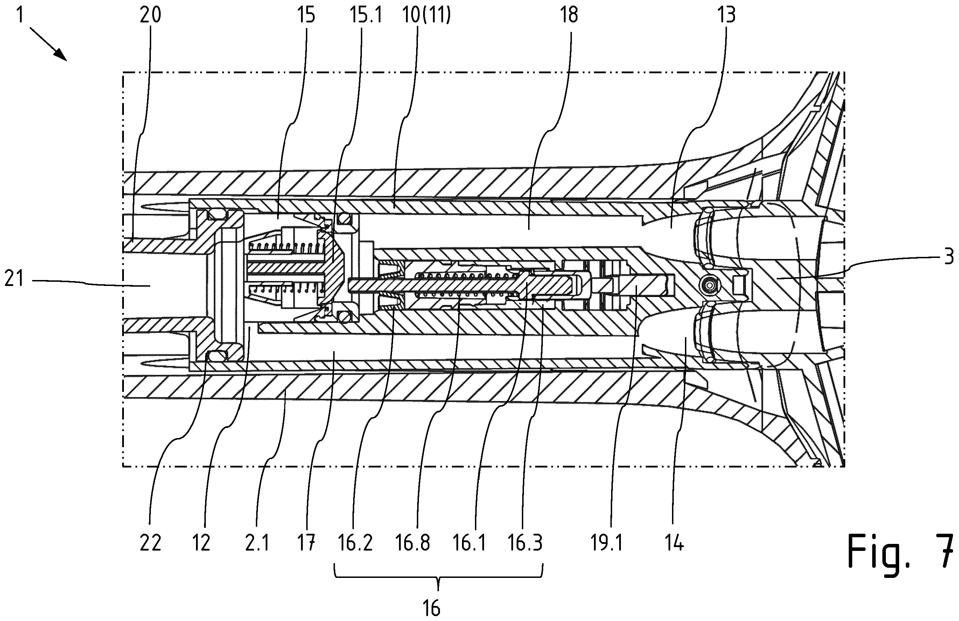

Wie insbesondere die Detailansicht in Figur 7 zeigt, ist das Rückflussverhindererventil 15 als eigenständige Einheit im Bereich der Wasserzulauföffnung 12.1 eingesetzt, und zwar entgegen der Betriebsfließrichtung in der Handbrause 1, so dass es ständig sperrt, sofern sein Dichtkolben 15.1 nicht aktiv durch das Schaltelement 16.1 aus seinem Sitz heraus, gegen den anstehenden Wasserstrom, in die Öffnungsstellung gedrängt wird. Nur wenn das Schaltelement 16.1 mittels der Umschalttaste 19 vorgeschoben worden ist, wird der Dichtkolben 15.1 von seinem Dichtsitz abgehoben und öffnet den Nebenfließkanal 12.3.

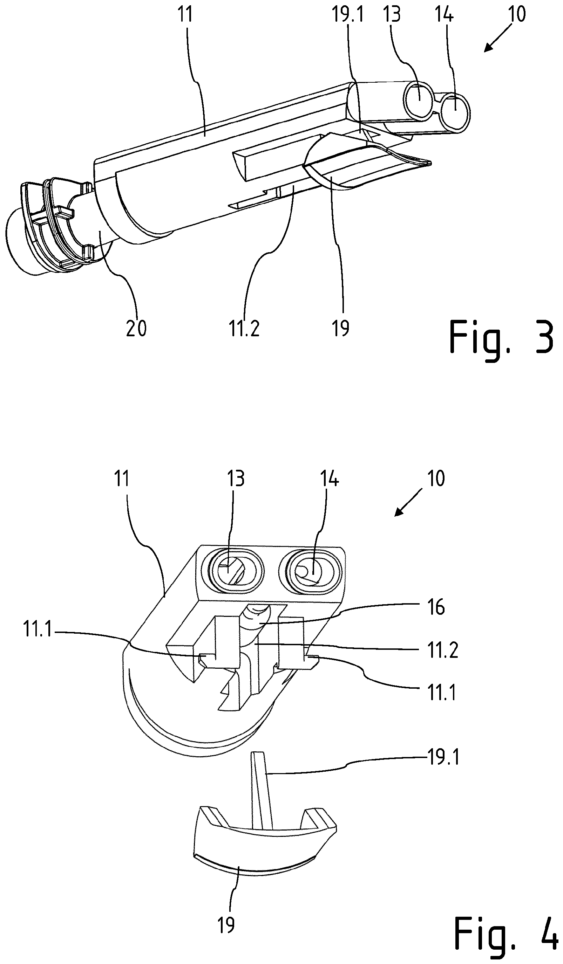

Die Schaltpatrone 10 mit der Wasseranschlusseinheit 20 ist in Figur 3 perspektivisch von außen dargestellt. Das Gehäuse 11 weist an seiner Unterseite einen Gehäuseschlitz 11.2 auf, in den der Schaltnocken 19.1 der Umschalttaste 19 eintaucht. Links ist die Wasseranschlusseinheit 20 sichtbar, rechts die Wasserauslauföffnungen 13, 14, die als Stutzen ausgebildet sind, die in Gegenstücke z. B. im Halsbereich einer Handbrause eingeschoben werden können.

Die Lagerung der Umschalttaste 19 am Gehäuse 11 wird aus der weiteren perspektivischen Darstellung in Figur 4 deutlich. Beidseits des Gehäuseschlitzes 11.2 sind Lagerzapfen 11.1 angeformt, über die eine schwenkbare Lagerung der Umschalttaste 19 direkt am Gehäuse 11 möglich ist. Durch den offenen Schlitz 11.2 ist die mittige Lage der Druck-Rast-Einheit 16 im Inneren erkennbar.

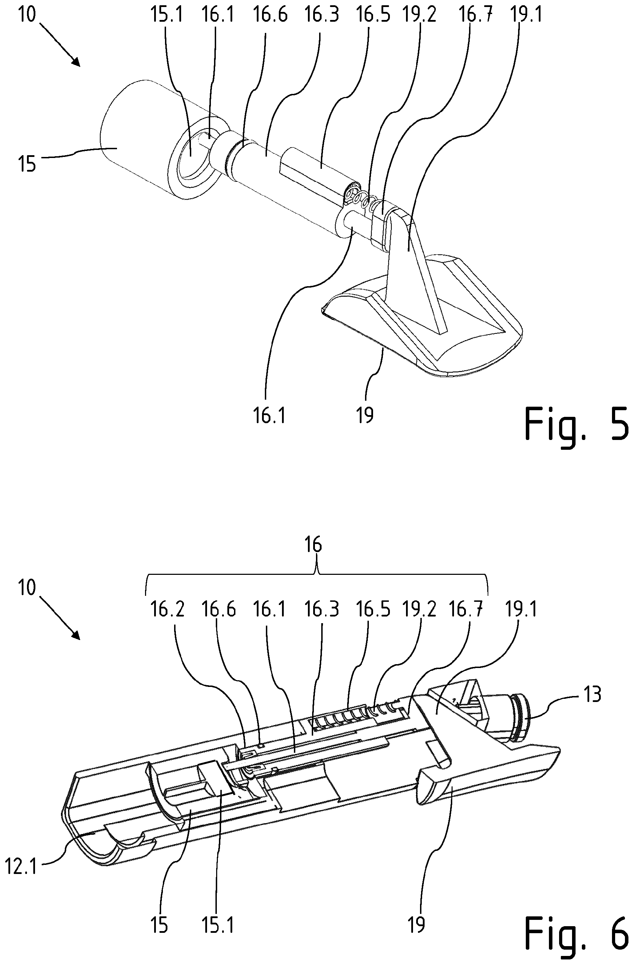

Die wesentlichen Funktionsteile der Schaltpatrone 10 sind in Figur 5 gezeigt; weggelassen ist hier nur das Gehäuse 11. Das stift- oder achsenförmige Schaltelement 16.1 ist in einem Gehäuse 16.3 der Druck-Rast-Einheit 16 aufgenommen und geführt, welches zumindest an seinem zum Dichtkolben 15.1 gewandten Ende zylindrisch ausgebildet ist. Dadurch ist es möglich, die Druck-Rast-Einheit 16 in einfacher Weise über einen aufgezogenen O-Ring 16.6 in einer Bohrung im Gehäuse 11 der Schaltpatrone 10 abzudichten. Das Schaltelement 16.1 wirkt direkt auf einen Dichtkolben 15.1 eines Rückflussverhindererventils 15.

Zum anderen Ende hin ist eine Federaufnahme 16.5 vorgesehen, in der ein Teil eines Federelements 19.2 aufgenommen ist. Das Schaltelement 16.1 ist an seinem rückwärtigen Ende mit einer Basis 16.7 verbunden, um einen Anschlag für das Federelement 19.2 zu bilden. Das Federelement 19.2 dient nur dazu, den ständigen Kontakt zwischen der Druck-Rast-Einheit 16 und der Umschalttaste 19 zu halten, damit die Umschalttaste 19 unabhängig vom jeweiligen Schaltzustand der Druck-Rast-Einheit 16 stets mit einer Kraft beaufschlagt ist und somit nicht lose im Gehäuse 11 hängt. Für die interne Rückstellungsfunktion der Druck-Rast-Einheit 16 ist ein weiteres, internes Federelement 16.8 vorgesehen, das in Figur 7 sichtbar ist.

Figur 6 zeigt einen vereinfachten perspektivischen Schnitt durch die Schaltpatrone 10, und zwar genau mittig in Längsrichtung, so dass die zentral angeordnete Druck-Rast-Einheit 16 und die Umschalttaste 19 ebenfalls längs geschnitten sind. Die für die abwechselnde Auf- und Abschaltung erforderlichen Einzelteile der an sich als Kugelschreiberantrieb bekannten Druck-Rast-Einheit 16 sind der Übersichtlichkeit halber in Figur 6 nicht einzeln dargestellt.

Die Funktion der erfindungsgemäßen Schaltpatrone 10 ist wie folgt: Wasser fließt durch den Hauptfließkanal 12.2 (Fig. 2). Der Nebenfließkanal 12.3 (Fig. 2) hingegen ist durch den Dichtkolben 15.1 des in einem Eingangsbereich 12.1 platzierten Rückflussverhindererventils 15 aufgrund des anstehenden Wasserdrucks abgesperrt.

Wird die Umschalttaste 19 betätigt, indem sie an dem in Figur 6 rechten Rand hochgedrückt wird, schwenkt sie um die Lagerzapfen 11.1 (siehe Figur 4) und schiebt darüber das Schaltelement 16.1 nach vorn in Richtung des Rückflussverhindererventils 15. Das Schaltelement 16.1 drückt auf den Dichtkolben 15.1 in dem Rückflussverhindererventil 15 und öffnet dadurch den Fließweg gegen den Staudruck des Wassers. Ein Dichtring 16.6 an der Außenseite des Gehäuses 16.3 dichtet die Druck-Rast-Einheit 16 gegenüber dem Gehäuse 11 ab. Eine weitere Dichtung 16.2 dichtet das Schaltelement 16.1 gegenüber dem Gehäuse 16.3 der Druck-Rast-Einheit 16 ab. Über die Basis 16.7 steht das Schaltelement 16.1 mit der Druckfeder 19.2 in Kontakt.

Mit Betätigung der Umschalttaste 19 wird am Schaltelement 16.1 ein axialer Hub erzwungen. Beim Zurückschalten hält die Feder 19.2 den Kontakt mit dem Zapfen 19.1 der Umschalttaste 19 aufrecht. Letztere wird somit immer kraftbeaufschlagt in einer bestimmten Position an der Handbrause gehalten, solange der Benutzer die Umschalttaste 19 nicht aktiv betätigt.

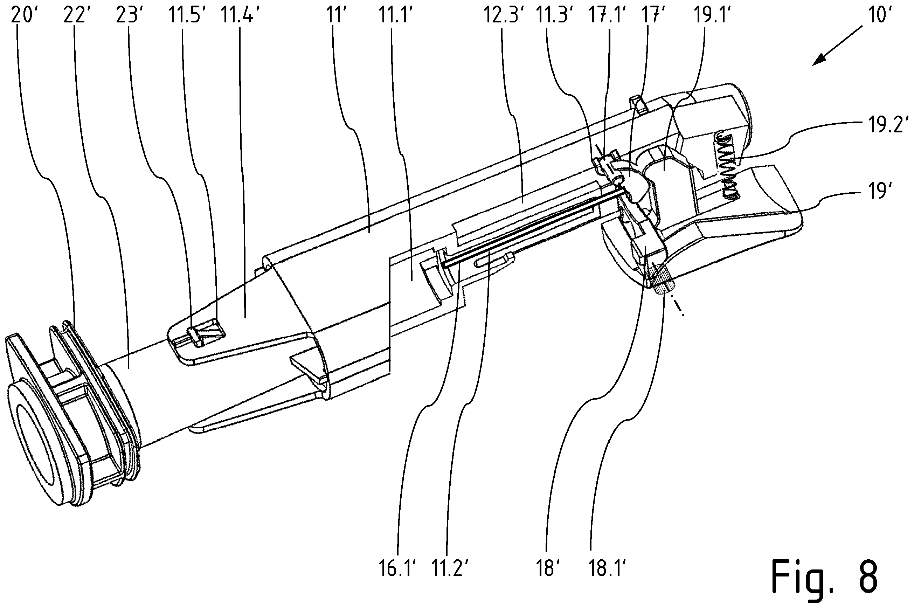

Figur 8 zeigt eine insbesondere hinsichtlich der Kinematik der Umschaltung abgewandelte Schaltpatrone 10' mit zugehöriger Wasseranschlusseinheit 20`. Dabei ist ein Gehäuse 11' teilweise geschnitten dargestellt. Die internen Funktionsteile wie Rückflussverhindererventil und Druck-Rast-Einheit sind in Anordnung und Funktion wie bei der ersten Ausführungsform auch und sind hier, bis auf das Schaltelement 16.1, nicht dargestellt. Sichtbar sind in Figur 8 jedoch eine Aufnahme 11.1' für das Rückflussverhindererventil, eine Aufnahme 11.2' für die Druck-Rast-Einheit und ein Nebenfließkanal 12.3`.

Unterschiedlich im Vergleich zur ersten Ausführungsform der Schaltpatrone ist zum einen die Lagerung einer Umschalttaste 19`. Diese besitzt keine eigenen Lagerzapfen zum direkten Eingriff in das Gehäuse 11' der Schaltpatrone 10`, sondern ist mit einem Lagerjoch 18' gelenkig verbunden, das in das Gehäuse 11' eingerastet ist. Durch das gesonderte Lagerjoch 18' wird die Fertigung des Gehäuses 11' erleichtert.

Zum anderen ist ein zusätzlicher Kipphebel 17' zwischen einem Schaltnocken 19.1' der Umschalttaste 19' und dem Schaltelement 16.1 der Druck-Rast-Einheit eingefügt. Der Kipphebel 17` ist mit seinen Lagerzapfen 17.1' gelenkig in einer Lagerschale 11.3' an der Oberseite des Gehäuses 11' gelagert. Der Schaltnocken 19.1' betätigt also den Kipphebel 17' und dieser übt den Druck auf das Schaltelement 16.1 der Druck-Rast-Einheit aus. Dadurch ist die zur Erzielung der Umschaltung notwendige Auslenkung an der Umschalttaste 19' verringert. Der Benutzer muss die Umschalttaste 19' nicht mehr so tief in den Griff eindrücken wie bei der ersten Ausführungsform. Außerdem kann das Schaltelement 16.1 der Druck-Rast-Einheit so innerhalb des Gehäuses 11' positioniert werden, dass es den Dichtkolben des Rückflussverhindererventils näher an dessen Zentrum berührt.

Eine Druckfeder 19.2' ist auch bei dieser Ausführungsform vorgesehen, um die Umschalttaste 19' unabhängig von der Schaltstellung in der Druck-Rast-Einheit stets in ihre Ausgangsstellung zurückzuführen und dort zu halten.

Auch die Wasseranschlusseinheit 20` ist gegenüber der ersten Ausführungsform geändert. Ein langer Stutzen 22' besitzt an seinem Außenumfang wenigstens zwei Rastelemente 23`, die an gegenüberliegenden Seiten angeformt sind. Sie rasten in Ausnehmungen 11.5' in Laschen 11.4' ein, die sich vom Gehäuse 11' aus in Richtung der Wasseranschlusseinheit 20' erstrecken. Dadurch kann die Wasseranschlusseinheit 20' bei einer fertigen Handbrause vom rückwärtigen Griffende her eingeschoben werden und wird dabei sowohl formschlüssig als auch dichtend mit der Schaltpatrone 10' verbunden.

## Patentansprüche

1. Schaltpatrone (10; 10') zur Zuschaltung eines Wasserwegs in einer Armatur, einer Handbrause (1) oder einem Brausekopf, wenigstens umfassend eine Umschalttaste (19; 19') sowie ein Gehäuse (11; 11') mit wenigstens einer Wasserzulauföffnung (12.1) an einem Ende und wenigstens zwei Wasserauslauföffnungen (13, 14) an einem anderen Ende,
wobei zwischen der Wasserzulauföffnung (12.1) und der einen Wasserauslauföffnung (14) ein Hauptfließkanal (12.2) ausgebildet ist;
- zwischen der Wasserzulauföffnung (12.1) und der anderen Wasserauslauföffnung (13) wenigstens ein unabhängig vom Hauptfließkanal (12.2) absperrbarer Nebenfließkanal (12.3) ausgebildet ist, so dass beim Absperren des Nebenfließkanals (12.3) der Hauptfließkanal (12.2) geöffnet bleibt;
- wenigstens eine Absperreinheit vorgesehen ist, die einen axial verschiebbaren Dichtkolben (15.1) zum Absperren des Nebenfließkanals (12.3) umfasst; und
- die Betätigungsrichtung eines über die Umschalttaste (19; 19') betätigbaren Schaltelements (16.1) der Absperreinheit, welches auf den Dichtkolben (15.1) wirkt, parallel zum Hauptfließkanal (12.2) und zum Nebenfließkanal (12.3) ist.

2. Schaltpatrone (10; 10') nach Anspruch 1, **dadurch gekennzeichnet, dass** der Dichtkolben (15.1) ein mit dem Wasserstrom schließendes Sitzventil ausbildet.

3. Schaltpatrone (10; 10') nach Anspruch 1 oder 2, **dadurch gekennzeichnet, dass**:
- der Dichtkolben (15.1) Teil eines Rückflussverhindererventils (15) ist, welches in eine Mündungsöffnung des Nebenfließkanals (12.3) eingesetzt ist, und
- der Nebenfließkanal (12.3) mittels des Rückflussverhindererventils (15) in Fließrichtung abgesperrt ist oder der Dichtkolben (15.1) mittels des Schaltelements (16.1) aus seinem Dichtsitz heraus vorgeschoben ist, um den Nebenfließkanal (12.3) zu öffnen.

4. Schaltpatrone (10; 10') nach einem der Ansprüche 1 bis 3, **dadurch gekennzeichnet, dass** die Absperreinheit wenigstens eine Druck-Rast-Einheit (16) umfasst, über welche der Dichtkolben (15.1) zum Absperren des Nebenfließkanals (12.3) axial verschiebbar ist.

5. Schaltpatrone (10; 10') nach einem der Ansprüche 1 bis 4, **dadurch gekennzeichnet, dass** die Umschalttaste (19; 19') schwenkbar am Gehäuse (11; 11') der Schaltpatrone (10; 10') gelagert ist und einen Schaltnocken (19.1; 19.1') zur Betätigung der Absperreinheit aufweist.

6. Schaltpatrone (10') nach Anspruch 5, **dadurch gekennzeichnet, dass** zwischen dem Schaltnocken (19.1') der Umschalttaste (19') und dem Schaltelement (16.1') ein Kipphebel (17') eingefügt ist, welcher gegenüber dem Gehäuse (11') schwenkbar ist

7. Schaltpatrone (10') nach Anspruch 6, **dadurch gekennzeichnet, dass** die Umschalttaste (19') schwenkbar an einem Lagerjoch (18') gelagert ist, welches mit dem Gehäuse (11') der Schaltpatrone (10') steckbar verbunden und/oder verrastet ist.

8. Schaltpatrone (10; 10') nach einem der Ansprüche 5 bis 7, **dadurch gekennzeichnet, dass** sich der Nebenfließkanal (12.3; 12.3') parallel zu dem Hauptfließkanal (12.2) erstreckt, wobei eine Druck-Rast-Einheit (16) und ein Schaltnocken (19.1; 19'.1) der Umschalttaste (19; 19') zwischen den Fließkanälen (12.2, 12.3; 12.3') angeordnet sind.

9. Schaltpatrone (10; 10') nach einem der Ansprüche 5 bis 8, **gekennzeichnet durch** wenigstens eine Rückstellfeder (19.2; 19.2'), über welche die Umschalttaste (19; 19') gegenüber dem Gehäuse (11, 11') und/oder dem Schaltelement (16.1) abgestützt ist.

10. Handbrause (1) mit einem Griffbereich (2.1), an dessen einem Ende ein Wasseranschluss (20; 20') ausgebildet ist und das an seinem anderen Ende in einen Kopfbereich (2.2) mit einem Brauseboden (3) übergeht, der wenigstens zwei getrennt voneinander benutzbare Wasseraustrittsöffnungen und/oder Gruppen von Wasseraustrittsöffnungen aufweist, und mit einer Schaltpatrone (10; 10') nach einem der vorhergehenden Ansprüche,
wobei die Wasserzulauföffnung (12.1) der Schaltpatrone (10; 10') mit dem Wasseranschluss (20; 20') des Griffbereichs (2.1) in Fließverbindung steht und die Wasserauslauföffnungen (13, 14) der Schaltpatrone (10; 10') jeweils mit einer der Wasseraustrittsöffnungen im Brauseboden (3) in Fließverbindung stehen.

11. Handbrause nach Anspruch 10, **dadurch gekennzeichnet, dass** der Wasseranschluss an einer steckbaren Wasseranschlusseinheit (20; 20') ausgebildet ist, die in den Endbereich des Griffabschnitts (2.1) eingesetzt ist und die mit einem Stutzen (22; 22') in die Wasserzulauföffnung (12.1) der Schaltpatrone (10; 10') eingreift.

12. Waschtischarmatur mit einem Gehäuse, von dem aus sich ein Armaturenauslauf bis zu einer Auslauföffnung erstreckt, wobei in der Waschtischarmatur wenigstens ein zu der Auslauföffnung führender Fließweg in einen Haupt- und einen Nebenfließweg aufgespaltet ist und wobei in dem Fließweg eine Schaltpatrone (10; 10') nach einem der vorhergehenden Ansprüche 1 bis 9 angeordnet ist.

## Claims

1. Switching cartridge (10; 10') for switching on a water path in a tap, a handheld shower (1) or a shower head,
at least comprising a changeover button (19; 19') and a housing (11; 11') having at least one water inlet opening (12.1) at one end and at least two water outlet openings (13, 14) at another end,
wherein a main flow channel (12.2) is formed between the water inlet opening (12.1) and one of the water outlet openings (14);
- at least one secondary flow channel (12.3) that can be shut off independently of the main flow channel (12.2) is formed between the water inlet opening (12.1) and the other of the water outlet openings (13), so that when the secondary flow channel (12.3) is shut off, the main flow channel (12.2) remains open;
- at least one shut-off unit is provided, which comprises an axially displaceable sealing piston (15.1) for shutting off the secondary flow channel (12.3); and
- the actuating direction of a switching element (16.1) of the shut-off unit, which can be actuated by the changeover button (19; 19') and which acts on the sealing piston (15.1), is parallel to the main flow channel (12.2) and to the secondary flow channel (12.3) .

2. Switching cartridge (10; 10') according to Claim 1, **characterized in that** the sealing piston (15.1) forms a seat valve which closes with the flow of water.

3. Switching cartridge (10; 10') according to Claim 1 or 2, **characterized in that**:
- the sealing piston (15.1) is part of a non-return valve (15), which is inserted into an orifice of the secondary flow channel (12.3), and
- the secondary flow channel (12.3) is shut off in the flow direction by means of the non-return valve (15), or the sealing piston (15.1) is pushed forward out of its sealing seat by means of the switching element (16.1) in order to open the secondary flow channel (12.3) .

4. Switching cartridge (10; 10') according to one of Claims 1 to 3, **characterized in that** the shut-off unit comprises at least one pressure locking unit (16), by which the sealing piston (15.1) can be displaced axially to shut off the secondary flow channel (12.3).

5. Switching cartridge (10; 10') according to one of Claims 1 to 4, **characterized in that** the changeover button (19; 19') is pivotably mounted on the housing (11; 11') of the switching cartridge (10; 10') and has a switching cam (19.1; 19.1') for actuating the shut-off unit.

6. Switching cartridge (10') according to Claim 5, **characterized in that** a rocker arm (17') which can be pivoted with respect to the housing (11') is inserted in between the switching cam (19.1') of the changeover button (19') and the switching element (16.1').

7. Switching cartridge (10') according to Claim 6, **characterized in that** the changeover button (19') is pivotably mounted on a bearing yoke (18'), which can be plug-connected and/or latched to the housing (11') of the switching cartridge (10').

8. Switching cartridge (10; 10') according to one of Claims 5 to 7, **characterized in that** the secondary flow channel (12.3; 12.3') extends parallel to the main flow channel (12.2), wherein a pressure locking unit (16) and a switching cam (19.1; 19'.1) of the changeover button (19; 19') are arranged between the flow channels (12.2, 12.3; 12.3').

9. Switching cartridge (10; 10') according to one of Claims 5 to 8, **characterized by** at least one return spring (19.2; 19.2'), via which the changeover button (19; 19') is supported with respect to the housing (11, 11') and/or the switching element (16.1).

10. Handheld shower (1) having a handle area (2.1), at one end of which a water connection (20; 20') is formed and which, at its other end, merges into a head area (2.2) having a shower base (3), which has at least two water outlet openings and/or groups of water outlet openings that can be used separately from one another, and having a switching cartridge (10; 10') according to one of the preceding claims,
wherein the water inlet opening (12.1) of the switching cartridge (10; 10') has a flow connection to the water connection (20; 20') of the handle area (2.1), and the water outlet openings (13, 14) of the switching cartridge (10; 10') each have a flow connection to one of the water outlet openings in the shower base (3).

11. Handheld shower according to Claim 10, **characterized in that** the water connection is formed on a water connection unit (20; 20') which can be plugged in, which is inserted into the end region of the handle section (2.1) and which engages with a connector (22; 22') in the water inlet opening (12.1) of the switching cartridge (10; 10').

12. Washbasin tap having a housing, from which a tap outlet extends as far as an outlet opening, wherein at least one flow path leading to the outlet opening is split into a main and a secondary flow path in the washbasin tap, and wherein a switching cartridge (10; 10') according to one of the preceding Claims 1 to 9 is arranged in the flow path.

## Revendications

1. Cartouche de commutation (10 ; 10') pour la mise en circuit d'un trajet d'eau dans une robinetterie, une douchette à main (1) ou une pomme de douche, comprenant au moins une touche de commutation (19 ; 19') ainsi qu'un boîtier (11 ; 11') avec au moins une ouverture d'arrivée d'eau (12.1) à une extrémité et au moins deux ouvertures de sortie d'eau (13, 14) à une autre extrémité,
un canal d'écoulement principal (12.2) étant formé entre l'ouverture d'arrivée d'eau (12.1) et l'une des ouvertures de sortie d'eau (14) ;
- entre l'ouverture d'arrivée d'eau (12.1) et l'autre ouverture de sortie d'eau (13) est formé au moins un canal d'écoulement secondaire (12.3) apte à être fermé indépendamment du canal d'écoulement principal (12.2), de sorte que, lorsque le canal d'écoulement secondaire (12.3) est fermé, le canal d'écoulement principal (12.2) reste ouvert ;
- il est prévu au moins une unité d'arrêt qui comprend un piston d'étanchéité (15.1) déplaçable axialement pour obturer le canal d'écoulement secondaire (12.3) ;
et
- la direction d'actionnement d'un élément de commutation (16.1) de l'unité d'arrêt, qui est apte à être actionné par la touche de commutation (19 ; 19') et qui agit sur le piston d'étanchéité (15.1), est parallèle au canal d'écoulement principal (12.2) et au canal d'écoulement secondaire (12.3).

2. Cartouche de commutation (10 ; 10') selon la revendication 1, **caractérisée en ce que** le piston d'étanchéité (15.1) forme un clapet à siège se fermant avec le flux d'eau.

3. Cartouche de commutation (10 ; 10') selon la revendication 1 ou la revendication 2, **caractérisée en ce que** :
- le piston d'étanchéité (15.1) fait partie d'un clapet anti-retour (15) qui est inséré dans une ouverture d'embouchure du canal d'écoulement secondaire (12.3),
et
- le canal d'écoulement secondaire (12.3) est fermé dans le sens de l'écoulement au moyen du clapet anti-retour (15) ou le piston d'étanchéité (15.1) est avancé hors de son siège d'étanchéité au moyen de l'élément de commutation (16.1) afin d'ouvrir le canal d'écoulement secondaire (12.3).

4. Cartouche de commutation (10 ; 10') selon l'une des revendications 1 à 3, **caractérisée en ce que** l'unité d'arrêt comprend au moins une unité de pression et d'arrêt (16), par laquelle le piston d'étanchéité (15.1) est apte à être déplacé axialement pour fermer le canal d'écoulement secondaire (12.3).

5. Cartouche de commutation (10 ; 10') selon l'une des revendications 1 à 4, **caractérisé en ce que** la touche de commutation (19 ; 19') est montée pivotante sur le boîtier (11 ; 11') de la cartouche de commutation (10 ; 10') et présente une came de commutation (19.1 ; 19.1') pour actionner l'unité d'arrêt.

6. Cartouche de commutation (10') selon la revendication 5, **caractérisée en ce que**, entre la came de commutation (19.1') de la touche de commutation (19') et l'élément de commutation (16.1') est inséré un levier basculant (17') qui est apte à pivoter par rapport au boîtier (11')

7. Cartouche de commutation (10') selon la revendication 6, **caractérisée en ce que** la touche de commutation (19') est montée pivotante sur une culasse de palier (18') qui est reliée par enfichage et/ou encliquetée avec le boîtier (11') de la cartouche de commutation (10').

8. Cartouche de commutation (10 ; 10') selon l'une des revendications 5 à 7, **caractérisée en ce que** le canal d'écoulement secondaire (12.3 ; 12.3') s'étend parallèlement au canal (12.2) d'écoulement principal, une unité de pression et d'arrêt (16) et une came de commutation (19.1 ; 19.1) de la touche de commutation (19 ; 19') étant disposées entre les canaux d'écoulement (12.2, 12.3 ; 12.3').

9. Cartouche de commutation (10 ; 10') selon l'une des revendications 5 à 8, **caractérisée par** au moins un ressort de rappel (19.2 ; 19.2'), par lequel la touche de commutation (19 ; 19') est supportée par rapport au boîtier (11, 11') et/ou à l'élément de commutation (16.1) .

10. Douchette à main (1) avec une zone de poignée (2.1) à une extrémité de laquelle est formé un raccord d'eau (20 ; 20') et qui se prolonge à son autre extrémité par une zone de tête (2.2) avec une partie inférieure (3) de douche qui présente au moins deux ouvertures de sortie d'eau et/ou groupes d'ouvertures de sortie d'eau utilisables séparément, et avec une cartouche de commutation (10 ; 10') selon l'une des revendications précédentes,
l'ouverture d'arrivée d'eau (12.1) de la cartouche de commutation (10 ; 10') étant en liaison d'écoulement avec le raccord d'eau (20 ; 20') de la zone de poignée (2.1) et les ouvertures (13, 14) de sortie d'eau de la cartouche de commutation (10 ; 10') étant chacune en liaison d'écoulement avec l'une des ouvertures de sortie d'eau dans la partie inférieure (3) de douche.

11. Douchette à main selon la revendication 10, **caractérisée en ce que** le raccordement d'eau est formé sur une unité de raccordement d'eau enfichable (20 ; 20') qui est insérée dans la zone d'extrémité de la partie de poignée (2.1) et qui s'engage avec un raccord (22 ; 22') dans l'ouverture d'arrivée d'eau (12.1) de la cartouche de commutation (10 ; 10').

12. Robinetterie de lavabo avec un boîtier à partir duquel s'étend une sortie de robinetterie jusqu'à une ouverture de sortie, dans laquelle au moins une voie d'écoulement menant à l'ouverture de sortie est divisée en une voie d'écoulement principale et une voie d'écoulement secondaire et dans laquelle une cartouche de commutation (10 ; 10') est disposée dans la voie d'écoulement selon l'une des revendications précédentes 1 à 9.
